# EUROPEAN PATENT SPECIFICATION

(11) **EP 3 155 905 B1**
(45) Date of publication and mention of the grant of the patent: **11.12.2019**
(21) Application number: 14894521.5
(22) Date of filing: 13.06.2014
(51) Int. Cl.: A23L 3/3418, B65D 81/26

(54) **METHOD FOR PRESERVING PERISHABLE FRESH FOOD PRODUCTS IN A CONTAINER AND CONTAINER PROVIDED THEREFOR**
VERFAHREN ZUR KONSERVIERUNG VON VERDERBLICHEN FRISCHEN NAHRUNGSMITTELPRODUKTEN IN EINEN BEHÄLTER UND BEHÄLTER DAFÜR
PROCÉDÉ DE CONSERVATION D'ALIMENTS FRAIS PÉRISSABLES DANS UN EMBALLAGE ET EMBALLAGE À CET EFET

(43) Date of publication of application: 19.04.2017
(73) Proprietor: Itene, Instituto Tecnológico Del Embalaje Transporte Y Logistica, 46980 Paterna (ES); Uve, S.A., 31500 Tudela (Navarra) (ES)
(72) Inventor: GALET DOMINGO, Ana Guadalupe, E-46980 Paterna (Valencia) (ES); BELTRAN SANAHUJA, Ana, E-46980 Paterna (Valencia) (ES); JOVANI ABRIL, María Rut, E-46980 Paterna (Valencia) (ES); PRATS GARCIA, Luis, E-46980 Paterna (Valencia) (ES); GUARDEÑO EXPOSITO, Luis Miguel, E-46980 Paterna (Valencia) (ES); BERMUDEZ SALDAÑA, José María, E-46980 Paterna (Valencia) (ES)
(74) Representative: ZBM Patents - Zea, Barlocci & Markvardsen
(86) International application number: PCT/ES2014/070494
(87) International publication number: WO 2015/189441

(56) References cited:
- EP-A1- 1 506 927
- EP-A1- 1 541 495
- WO-A1-2005/034641
- WO-A1-2007/073542
- WO-A1-2009/035740
- WO-A1-2009/111768
- RAY SOUMI ET AL.: 'Development of Chlorine Dioxide Releasing Film and Its Application in Decontaminating Fresh Produce.' JOURNAL OF FOOD SCIENCE vol. 78, no. 2, ISSN 0022-1147 pages M276 - M284, XP055242782

## Description

The present invention relates generally to a method for preserving perishable fresh food products in a packaging and the packaging carrying out such method.

More specifically, the object of the invention is a method for preserving fresh perishable food products, especially applicable for meat and meat derivatives in a packaging, wherein the method eliminates the need for adding a modified and/or protective atmosphere, the packaging itself generating said protective atmosphere from a chemical reaction that generates carbon dioxide which is triggered by the natural exudate of the packaged product and which extends over time, such as to effectively control the generation of gases inside the packaging and avoiding buildup of exudate in contact with the food product inside said packaging. It is also an object of the invention a protective atmosphere generating packaging for the fresh perishable product packaged in accordance with the aforementioned method.

The lifetime of air packaged chilled meat is about 5-7 days approximately, with the development of microorganisms, fat oxidation and change in the colour of the meat being the main deterioration mechanisms affecting the shelf life. Therefore, the most commonly used technique for preserving such products involves the use of modified atmospheres, with an approximate composition of 20-70% CO₂, which has proven to be an effective antibacterial.

For example, in the case of modified atmosphere packaging of products and poultry meal, such modified atmosphere packaging process has several advantages as compared to conventional air packaging processes, such as, among others, extending the lifetime of the food delaying and/or preventing microbial growth and chemical and enzymatic deterioration responsible for such deterioration during storage and commercialization; reducing the intensity of other complementary conservation treatments; improving optimization of warehouse management, since as they are hermetically sealed packagings different foods can be stored in the same packaging and a better food presentation is provided helping to provide a freshness and natural product appearance. Other factors such as low storage temperature and different compositions of the packaging modified atmosphere are also important to extend the product lifetime, reducing microbial growth and promoting preservation of its organoleptic properties.

However, modified atmosphere packaging also presents a number of disadvantages, such as high initial investment in equipment, high operational and maintenance costs, gas consumption for generating the modified atmosphere, the need for qualified personnel for machine operation, the possibility of packaging collapse, etc. On the other hand, packaged fresh meat with a modified atmosphere may suffer from exudate problems as a result of excessively high levels of CO₂ inside the packaging. This exudate phenomenon is produced by excessive dissolution of this gas in tissues, negatively affecting texture and appearance of the product and also contributing to microbial growth (loannis S. Arvanitoyannis & Alexandros Ch. Stratakos, Application of Modified Atmosphere Packaging and Active/Smart Technologies to Red Meat and Poultry: A Review, Food Bioprocess Technol (2012) 5: 1423-1446). Precisely because of this dissolution of CO₂ in the tissues of the product, providing a high initial dose is required to ensure that there remains an effective concentration throughout the lifetime of the packaged product.

As an alternative to modified atmosphere, some examples of packaging systems including sachets or labels as active CO₂ releasers , which are used alone or in combination with O₂ absorbers, are available in the market. WO 2009/111768 discloses a food packaging with absorbent food pads having one or more active agents disclosed therein.

An example of a CO₂ releasing packaging is the Verifrais® packaging (manufactured by Codimer SARL, Paris, France) which is mainly used to extend the lifetime of fresh meat and fish. However, the presence of such separate devices, inside the packaging, may result in food safety issues in the event that accidental breakage of the sachet occurs, they require an additional operation in the packaging process and giving rise to rejection by the consumer. In fact, no suitable commercial development has currently been identified where CO₂ generating active agent is included in the packaging material itself, without the need for an external element.

For example, WO/2013/180013, *"Oxygen-generating*/*CO₂-gas-absorbing agent composition, packaging for oxygen-generating*/ *CO₂-gas-absorbing agent, and transportation method for live fish and shellfish",* discloses a composition prepared from an oxygen generating component and a CO₂ absorbent including a solid peroxide, a peroxide decomposition catalyst and an alkali metal carbonate.

In document WO/2013/177352, *"Method of rapid carbon dioxide absorption",* a method for absorbing CO₂ is provided comprising providing a packaging containing a CO₂ releasing product, providing calcium hydroxide in the packaging and sealing it.

PCT/EP2013/057627, *"Oxygen-releasing inserts"* discloses an oxygen-releasing insert that allows for actively controlling the environment inside a packaging in order to maintain a predetermined gas composition therein, the insert comprising hydrogen peroxide.

WO 2005/034641 is directed to nonwoven materials containing a chemical composition capable of generating carbon dioxide when activated. The document provides a latent carbon dioxide gas generating material having a first layer containing fiber and a binder, having a basis weight of from about 25 gsm to about 100 gsm and having inner and outer surfaces, a second layer containing a carbon dioxide gas generating composition, having a basis weight of from about 5 gsm to about 300 gsm and having upper and lower surfaces, and a third layer containing fiber and a binder, having a basis weight of from about 25 gsm to about 100 gsm and having inner and outer surfaces. The inner surface of the first layer is in contact with the upper surface of the second layer, and the inner surface of the third layer is in contact with the lower surface of the second layer.

The present invention overcomes the problems explained above by providing a method for preserving fresh perishable food products in a packaging wherein the packaging itself forms a CO₂ generating system by including CO₂ generating active agents from a coating present in the packaging and that is activated with the packaged product exudate itself.

In the present description, the terms relating to "foods", "perishable food products", "meat products or meat derivatives" are used interchangeably in reference to the contents of the packaging described herein. The corresponding definitions are those published in the Spanish Food Code (Decree 2484/1967, Last updated, published on 15/02/1985, effective from 16/02/1985).

Thus, perishable foods are considered those that, because of their nature, require special storage conditions in their periods of storage and transportation. The generic term of meat comprises the edible part of muscles of healthy, hygienically slaughtered bovine, ovine, swine, goats, equids and camelids. By extension, it also applies to that of farmyard animals, hair and feather hunting and marine mammals.

Similarly, the definition given by said Code for the terms "packaging" is considered, that is, any container intended to contain a food with the specific purpose of protecting it from deterioration, contamination or adulteration, and "covering" as the cover that is closely linked to any of the materials that protects and preserves it.

The present invention relates to a packaging according to claim 1, and a method according to claim 11.

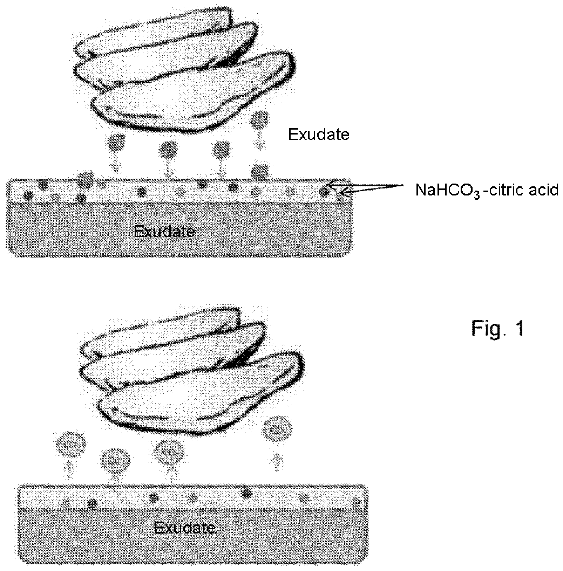

Fig. 1 schematically shows how the CO₂ generating packaging works. As it can be seen from this figure, the exudate from the food product comes into contact with the reagents included in the polymer coating on the material forming the packaging such that the reaction is triggered between these reagents, which are found in non-stoichiometric amounts so that CO₂ in the gaseous state can be generated, which is released into the packaging head space. Since the release of CO₂ gas is slow and continuous over time, a detrimental excess of this protective gas is not generated inside the packaging.

Examples of polymers for the polymer coating applied to the CO₂ protective atmosphere generating packaging are polyamide, polylactic acid (PLA), polycaprolactone (PCL) or polystyrene. Examples of solvents suitable for the above mentioned polymers are ethanol, acetone or ethyl acetate.

Preferably a polystyrene-based polymer is used, such as crystal polystyrene or High-impact Polystyrene (HIPS) dissolved in ethyl acetate.
In one embodiment, the polystyrene, the crystal polystyrene or the High-impact Polystyrene (HIPS) in ethyl acetate is used with a concentration, in weight percent, of 4-20%, preferably 5-15 % and particularly preferably of 7-12%.

The method for applying the polymer coating is not particularly limited, being possible to be applied by lamination dissolution (casting) or spraying, for example. In one embodiment of the invention, spraying is used as a method for applying the polymer coating to the packaging.

In another embodiment of the method of the invention a non-stoichiometric mixture of active agents is used in a weight ratio with respect to the mixture of active agents of 30-50% sodium bicarbonate and 50-70% citric acid.

In yet another embodiment of the method of the invention, the amount of citric acid included in the coating ranges from 0.002 to 0.8 grams of citric acid per gram of food. Similarly, in one embodiment, the amount of sodium bicarbonate included in the coating ranges from 0.008 to 0.001 grams of sodium bicarbonate per gram of food.

The protective atmosphere generating packaging for the perishable fresh product packaged according to the above method is also an object of the present invention, a protective atmosphere being generated by the packaging itself from a non-stoichiometric reaction between the carbon dioxide generating active agents, citric acid and sodium bicarbonate included in the form of a polymer coating on the material forming the packaging and wherein the packaging allows contact between the exudate generated by the packaged product and the coating, while at the same time preventing said exudate from returning back to the food product.

In this respect, any high or medium barrier polymer material suitable for food packaging can be employed as the material constituting the packaging.

The protective atmosphere generating packaging of the invention is not limited as to its shape, a packaging being any container intended for containing a food with the specific purpose of protecting it from deterioration, contamination or adulteration as mentioned above. Therefore, the polymer coating may be applied to any material forming the packaging, whether it is in the form of punnet, tray, bag, etc., as long as it meets the dual functionality of the packaging with respect to the above described method, that is, besides releasing CO₂ from a built-in coating, facilitating contact between the coating and the exudate and preventing the exudate from returning to the packaged food.

In one exemplary embodiment of the packaging of the invention, this takes the form of a tray or punnet whose bottom is shaped by a pattern of cells and it is covered throughout the interior thereof by the CO₂ generating coating described above. The punnet includes a separating sheet on which food is provided, thus defining a double bottom in the punnet. Said separating sheet has funnel holes on its side opposite the food, the holes allowing the exudate to pass through the separating sheet only in the direction towards the bottom of the punnet and collect it in the cell pattern of the bottom thereof, thereby triggering the CO₂ generating reaction by the packaging coating. The funnel shape of the holes in the separating sheet prevents it from returning to the food. The packaging can be closed by any appropriate closure element, such as for example a lid or an envelope-like film surrounding the packaging assembly and the food contained therein.

The packaging of the invention may also be designed to be reclosable by using suitable closing-opening means, such as of the zip type or side zipper, by means of removable lids, etc. This type of reclosable packaging according to the invention allows the consumer to open the packaging, to consume part of the product and to close it again, generating once again a CO₂ rich atmosphere in the interior thereof and extending the lifetime of the food.

### Examples

### Polymer coating and its application to the material forming the packaging

Selecting the base polymer and the solvent as well as the active agents are the most important aspects of the development of the active coating. After various studies, these aspects were optimized, resulting in the selection of a polymer coating formed by crystal/HIPS polystyrene dissolved in ethyl acetate, wherein the active agents sodium bicarbonate and citric acid are included in amounts relating to 150% by weight relative to the weight of the base polymer. The active components are included in the form of a mixture at a rate of 2-3 g of mixture of active components per packaging to reach values of %CO₂ within the values required for this application (20-30% CO₂ in the packaging head space).

The method for applying the polymer coating was carried out in two steps:
a) spraying the dissolution of crystal/HIPS polystyrene dissolved in ethyl acetate with a liquids gun and
b) applying the mixture of the solid active components by a solids gun or gravimetric methods.

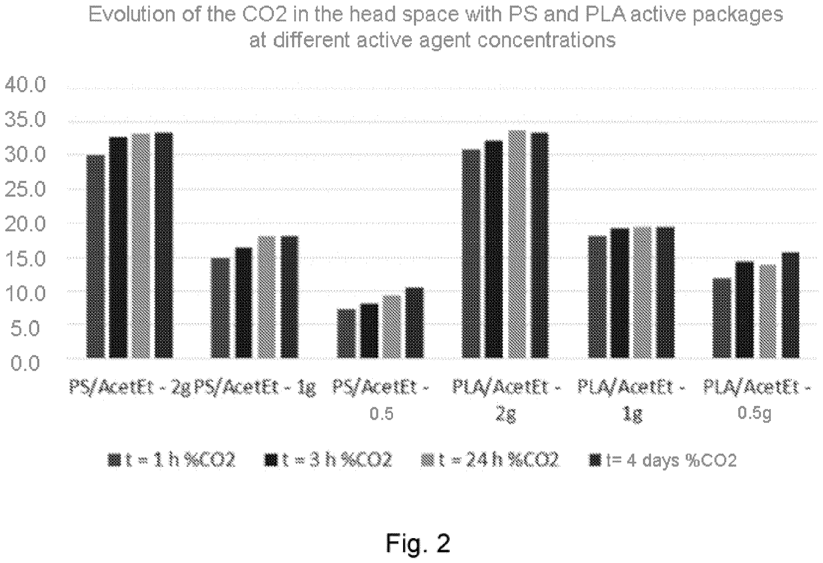

Fig. 2 shows the evolution of CO₂ in the head space of active packagings of PS (polystyrene) and PLA (polylactic acid) with increasing amounts of active components (sodium bicarbonate and citric acid).

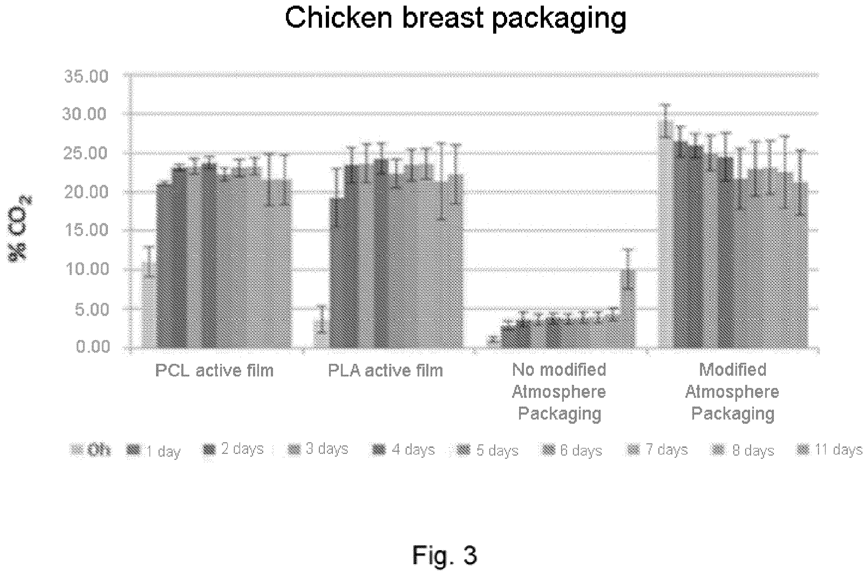

As shown in Fig. 3, the punnets, in this example intended to contain chicken, developed with the CO₂ generating active coatings and air packaged (21% O₂ and 79% N₂) reached 20% CO₂ the first day of the test, being in balance by approximately 23% CO₂ for the 11 days during which it was extended. However, chicken packaged under modified atmosphere (70% O₂ and 30% CO₂) decreased its CO₂ content in the packaging during the same period until a percentage similar to that of the active punnets was reached. This is due to gas absorption in chicken meat causing the CO₂ to be gradually decreased in the case of modified atmosphere packaging, promoting microbiological growth.

In this regard, it is important to note that the study conducted allowed not only a suitable CO₂ generating coating to be identified, but also to check its effectiveness with chicken exudate, reaching values similar to those used in the modified atmosphere and remaining constant over time.

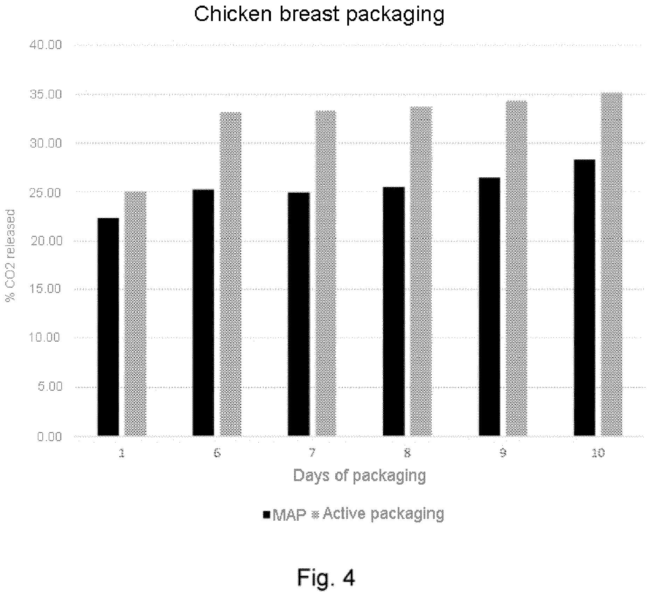

Fig. 4 shows the percentage of CO₂ that is released in a chicken packaging with polystyrene coating in ethyl acetate. As shown in this figure, values similar to those achieved with the use of modified atmosphere (MAP) are reached, remaining constant over time.

### Packaging design

The packaging design was further investigated from the functional point of view of the punnet coating application. Initially, the starting point was two conceptual designs from which the only viable design was finally selected taking into consideration food safety. The selected option was developed at a prototype level in order to validate its functionality, in this case a double bottom design. During design definition it was important to consider the following requirements: an even coating distribution, defined coating boundaries and having good adhesion to base material, correct direction of exudate into coated areas and with a sealing extending for a period of time sufficient for triggering the reaction, facilitating subsequent release of CO₂ from the double bottom into the head space evenly, preventing some parts of the product from receiving greater exposure to released CO₂, once the reaction has been started, the punnet having to collect and retain the exudate, not only in horizontal position but also in case of an inclined punnet. Variables related to manufacturing, such as the possibility of being manufactured by conventional methods or with slight variations (thermoforming and die-cutting), the fact that the coating arrangement does not hinder spraying and that it can be applied by conventional methods with slight modifications and suit any packaging line were also taken into account.

All of this led to a design based on punnet, a separating sheet and a means for covering the punnet, in this particular case a PET/EVOH/PE packaging film.

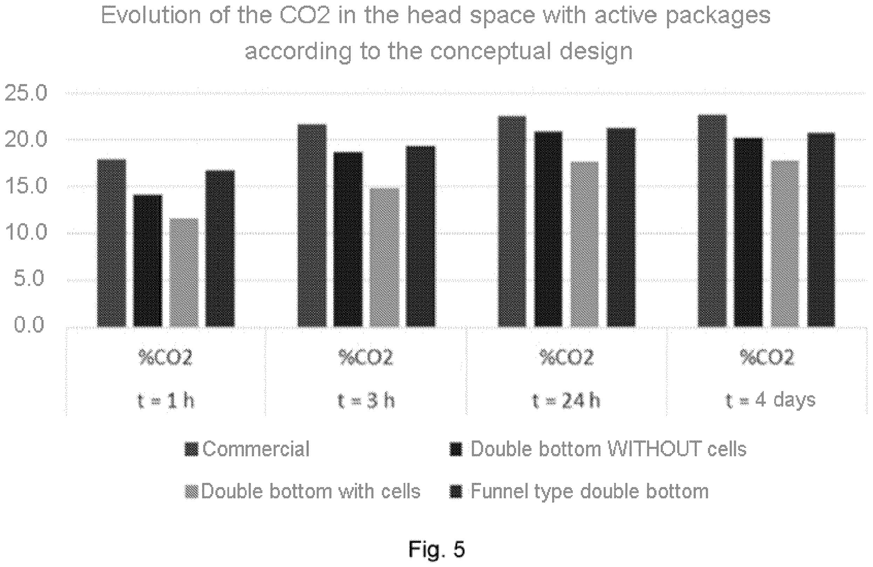

As shown in Fig. 5, all the design alternatives for the packaging including the CO₂ generating coating would be functionally appropriate. However, in preliminary tests with punnets without cells a problem of poor adhesion of the coating to the punnet was observed, such problem being solved by the design with cells as described above.

For a tray with 300 g of chicken, the grams of each active component/g of chicken was calculated for different cases in order to obtain an amount of CO₂ of about 10, 20 and 30%. The data obtained are presented in the following table:

| Mixture amount | Sodium bicarbonate (g) | Citric acid (g) | NaHCO₃ (g)/g of chicken | Citric acid (g)/g of chicken |
|---|---|---|---|---|
| 1.0000 | 0.375 | 0.625 | 0.0011 | 0.0022 |
| 2.0000 | 0.750 | 1.250 | 0.0022 | 0.0044 |
| 3.0000 | 1.125 | 1.875 | 0.0033 | 0.0067 |

## Claims

1. A packaging configured to generate a protective atmosphere for a perishable fresh food product generating exudate,
the packaging comprising
an interior, and **characterized by**
a coating on the interior of the packaging,
the coating comprising a mixture of a polymer, citric acid and sodium bicarbonate, wherein the amounts of citric acid and sodium bicarbonate are chosen such that a non-stoichiometric reaction can occur between the citric acid and sodium bicarbonate when the exudate from the food product enters into contact with the coating.

2. The packaging according to claim 1, wherein the polymer is a polymer dissolved in a solvent.

3. The packaging according to claim 2, wherein the polymer is one of polyamide, polylactic acid, polycaprolactone and polystyrene and wherein the solvent is one of ethanol, acetone and ethyl acetate.

4. The packaging according to claim 2, wherein
the polymer is a polystyrene based polymer dissolved in ethyl acetate,
preferably a crystal polystyrene or high impact polystyrene dissolved in ethyl acetate,
more preferably a crystal polystyrene or high impact polystyrene in ethyl acetate with a concentration in weight percent of 4-20%, more preferably a concentration in weight percent of 5 - 15%, and most preferably a concentration in weight percent of 7 - 12%.

5. The packaging according to any of claims 1 - 4, wherein the packaging is made from a polymer suitable for food packaging.

6. The packaging according to any of claims 1 - 5, further comprising a sheet for separating the food product from the coating, wherein the sheet comprises a plurality of funnel-shaped holes configured to let the exudate pass.

7. The packaging according to any of claims 1 - 6, wherein an active agent mixture of sodium bicarbonate and citric acid agents is formed by 30-50% sodium bicarbonate and 50-70% citric acid, in weight percent relative to the active agent mixture.

8. The packaging according to any of claims 1 - 7, wherein the amount of citric acid included in the coating ranges from 0.002 to 0.8 grams of citric acid per gram of food.

9. The packaging according to any of claims 1 - 8, wherein the amount of sodium bicarbonate included in the coating ranges from 0.001 to 0.008 grams of sodium bicarbonate per gram of food.

10. The packaging according to any of claims 1 - 9, further comprising the fresh perishable food product, wherein the food product is or comprises meat or meat derivatives.

11. A method for providing a packaging according to any of claims 1 - 10, **characterized by** comprising
providing a packaging having an interior; and
providing a coating on the interior of the packaging, wherein
the coating comprises a mixture of a polymer, citric acid and sodium bicarbonate, wherein the amounts of citric acid and sodium bicarbonate are chosen such that a non-stoichiometric reaction can occur between the citric acid and sodium bicarbonate when the exudate from the food product enters into contact with the coating.

12. The method according to claim 11, wherein the providing a coating on the interior of the packaging comprises
spraying on the packaging the polymer dissolved in a solvent using a liquid spray gun, and
providing a mixture of solid sodium bicarbonate and solid citric acid.

13. The method according to claim 12, wherein providing the mixture of solid sodium bicarbonate and solid citric acid comprises applying the mixture with gravimetric methods.

14. The method according to any of claims 11 - 13, further comprising providing the perishable fresh food product in the packaging; and
closing the packaging.

## Patentansprüche

1. Eine Verpackung, die konfiguriert ist, um eine Schutzatmosphäre für ein verderbliches frisches aussickerndes Nahrungsmittelprodukt zu erzeugen,
wobei die Verpackung
einen Innenraum umfasst und **gekennzeichnet ist durch** eine
Beschichtung auf dem Innenraum der Verpackung,
wobei die Beschichtung eine Mischung aus einem Polymer, Zitronensäure und Natriumhydrogencarbonat umfasst, wobei die Mengen von Zitronensäure und Natriumhydrogencarbonat so ausgewählt sind, dass eine nicht-stöchiometrische Reaktion zwischen der Zitronensäure und dem Natriumhydrogencarbonat stattfinden kann, wenn die aus dem Nahrungsmittelprodukt ausgesickerte Substanz in Kontakt mit der Beschichtung kommt.

2. Die Verpackung nach Anspruch 1, wobei das Polymer ein in einem Lösungsmittel gelöstes Polymer ist.

3. Die Verpackung nach Anspruch 2, wobei das Polymer eines aus Polyamid, Polymilchsäure, Polycaprolacton und Polystyrol ist und wobei das Lösungsmittel eines aus Ethanol, Aceton und Ethylacetat ist.

4. Die Verpackung nach Anspruch 2, wobei
das Polymer ein auf Polystyrol beruhendes in Ethylacetat gelöstes Polymer,
vorzugsweise ein in Ethylacetat gelöstes Kristallpolystyrol oder hochschlagfestes Polystyrol (*High Impact Polystyrene*),
noch besser ein Kristallpolystyrol oder hochschlagfestes Polystyrol in Ethylacetat mit einer Konzentration von 4-20 Gew.-%, noch besser einer Konzentration von 5 - 15 Gew.-% und am besten einer Konzentration von 7 - 12 Gew.-% ist.

5. Die Verpackung nach einem der Ansprüche 1 - 4, wobei die Verpackung aus einem für Lebensmittelverpackungen geeignetes Polymer besteht.

6. Die Verpackung nach einem der Ansprüche 1 - 5, weiterhin umfassend eine Schicht zur Trennung des Lebensmittelprodukts von der Beschichtung, wobei die Schicht eine Vielzahl von trichterförmigen Löchern umfasst, die derart konfiguriert sind, dass die ausgesickerte Substanz durchgelassen wird.

7. Die Verpackung nach einem der Ansprüche 1 - 6, wobei eine Wirkstoffmischung aus Natriumhydrogencarbonat und Zitronensäure als Mittel mit 30-50 Gew.-% Natriumhydrogencarbonat und 50-70 Gew.-% Zitronensäure bezüglich der Wirkstoffmischung gebildet wird.

8. Die Verpackung nach einem der Ansprüche 1 - 7, wobei die Menge von in der Beschichtung enthaltener Zitronensäure von 0,002 bis 0,8 Gramm Zitronensäure pro Gramm Lebensmittel reicht.

9. Die Verpackung nach einem der Ansprüche 1 - 8, wobei die Menge von in der Beschichtung enthaltenem Natriumhydrogencarbonat von 0,001 bis 0,008 Gramm Natriumhydrogencarbonat pro Gramm Lebensmittel reicht.

10. Die Verpackung nach einem der Ansprüche 1 - 9, weiterhin umfassend das frische verderbliche Lebensmittelprodukt, wobei das Lebensmittelprodukt Fleisch oder Fleischderivate ist oder umfasst.

11. Ein Verfahren zum Bereitstellen von einer Verpackung nach einem der Ansprüche 1 - 10, **dadurch gekennzeichnet, dass** es folgendes umfasst
das Bereitstellen von einer Verpackung, die einen Innenraum hat; und
das Bereitstellen von einer Beschichtung auf dem Innenraum der Verpackung, wobei
die Beschichtung eine Mischung aus einem Polymer, Zitronensäure und Natriumhydrogencarbonat umfasst, wobei die Mengen von Zitronensäure und Natriumhydrogencarbonat so ausgewählt sind, dass eine nicht-stöchiometrische Reaktion zwischen der Zitronensäure und dem Natriumhydrogencarbonat stattfinden kann, wenn die aus dem Nahrungsmittelprodukt ausgesickerte Substanz in Kontakt mit der Beschichtung kommt.

12. Das Verfahren nach Anspruch 11, wobei das Bereitstellen von einer Beschichtung auf dem Innenraum der Verpackung folgendes umfasst
das Besprühen des in einem Lösungsmittel gelösten Polymers auf die Verpackung mit einer Flüssigkeitssprühpistole, und
das Bereitstellen von einer Mischung aus festem Natriumhydrogencarbonat und fester Zitronensäure.

13. Das Verfahren nach Anspruch 12, wobei das Bereitstellen von der Mischung aus festem Natriumhydrogencarbonat und fester Zitronensäure das Aufbringen der Mischung mittels gravimetrischer Verfahren umfasst.

14. Das Verfahren nach einem der Ansprüche 11 - 13, weiterhin umfassend das Bereitstellen von dem verderblichen frischen Lebensmittelprodukt in der Verpackung; und
das Schließen der Verpackung.

## Revendications

1. Un emballage configuré pour générer une atmosphère protectrice pour un produit alimentaire frais périssable générant un exsudat,
l'emballage comprenant
un intérieur, et étant **caractérisé par**
un revêtement sur l'intérieur de l'emballage,
le revêtement comprenant un mélange d'un polymère, acide citrique et bicarbonate de sodium, dans lequel les quantités d'acide citrique et de bicarbonate de sodium sont choisies de façon qu'une réaction non-stœchiométrique peut se produire entre l'acide citrique et le bicarbonate de sodium lorsque l'exsudat du produit alimentaire vient en contact avec le revêtement.

2. L'emballage selon la revendication 1, dans lequel le polymère est un polymère dissous dans un solvant.

3. L'emballage selon la revendication 2, dans lequel le polymère est un parmi le polyamide, l'acide polylactique, la polycaprolactone et le polystyrène et dans lequel le solvant est un parmi l'éthanol, l'acétone et l'acétate d'éthyle.

4. L'emballage selon la revendication 2, dans lequel
le polymère est un polymère à base de polystyrène dissous dans acétate d'éthyle,
de préférence un polystyrène cristal ou un polystyrène choc (*high impact polystyrene*) dissous dans acétate d'éthyle,
plus préférablement un polystyrène cristal ou un polystyrène choc dans acétate d'éthyle avec une concentration de 4-20 % en poids, plus préférablement une concentration de 5 - 15 % en poids et le plus préférablement une concentration de 7 - 12 % en poids.

5. L'emballage selon l'une quelconque des revendications 1 - 4, dans lequel l'emballage est réalisé en un polymère approprié pour l'emballage d'aliments.

6. L'emballage selon l'une quelconque des revendications 1 - 5, comprenant en outre une couche de séparation du produit alimentaire par rapport au revêtement, dans lequel la couche comprend une pluralité de trous en forme d'entonnoir configurés pour laisser passer l'exsudat.

7. L'emballage selon l'une quelconque des revendications 1 - 6, dans lequel un mélange d'agent actifs des agents bicarbonate de sodium et acide citrique est formé avec 30-50 % bicarbonate de sodium et 50-70 % acide citrique, en pourcentage en poids par rapport au mélange d'agents actifs.

8. L'emballage selon l'une quelconque des revendications 1 - 7, dans lequel la quantité d'acide citrique incluse dans le revêtement va de 0,002 à 0,8 grammes d'acide citrique par gramme d'aliment.

9. L'emballage selon l'une quelconque des revendications 1 - 8, dans lequel la quantité de bicarbonate de sodium incluse dans le revêtement va de 0,001 à 0,008 grammes de bicarbonate de sodium par gramme d'aliment.

10. L'emballage selon l'une quelconque des revendications 1 - 9, comprenant en outre le produit alimentaire périssable frais, dans lequel le produit alimentaire est ou comprend de la viande ou des dérivés de viande.

11. Un procédé pour fournir un emballage selon l'une quelconque des revendications 1 - 10, **caractérisé en ce qu'**il comprend
fournir un emballage ayant un intérieur ; et
fournir un revêtement sur l'intérieur de l'emballage, dans lequel
le revêtement comprend un mélange d'un polymère, acide citrique et bicarbonate de sodium, dans lequel les quantités d'acide citrique et de bicarbonate de sodium sont choisies de façon qu'une réaction non-stœchiométrique peut se produire entre l'acide citrique et le bicarbonate de sodium lorsque l'exsudat du produit alimentaire vient en contact avec le revêtement.

12. Le procédé selon la revendication 11, dans lequel fournir un revêtement sur l'intérieur de l'emballage comprend
pulvériser sur l'emballage le polymère dissous dans un solvant en utilisant un pistolet de pulvérisation de liquides, et
fournir un mélange de bicarbonate de sodium solide et d'acide citrique solide.

13. Le procédé selon la revendication 12, dans lequel fournir le mélange de bicarbonate de sodium solide et d'acide citrique solide comprend appliquer le mélange par des méthodes gravimétriques.

14. Le procédé selon l'une quelconque des revendications 11 - 13, comprenant en outre fournir le produit alimentaire frais périssable dans l'emballage ; et
fermer l'emballage.
